(19) Europäisches Patentamt
European Patent Office
Office européen des brevets

(11) **EP 1 786 219 B1**

(12) **EUROPEAN PATENT SPECIFICATION**

(45) Date of publication and mention
of the grant of the patent:
**23.04.2008 Bulletin 2008/17**

(51) Int Cl.:
***H04Q 7/36*** (2006.01)

(21) Application number: **05256933.2**

(22) Date of filing: **10.11.2005**

(54) **Method and apparatus for allocating channels for data communication in a radio communication system**

Verfahren und Vorrichtung zur Kanalzuteilung für Datenkommunikation in einem Funk-Kommunikationssystem

Procédé et dispositif d'allocation de canaux pour la communication de données dans un système de communication radio

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(43) Date of publication of application:
**16.05.2007 Bulletin 2007/20**

(73) Proprietor: **Research In Motion Limited**
**Waterloo, Ontario N2L 3W8 (CA)**

(72) Inventors:
• **Pecen, Mark**
**Waterloo, Ontario, N2L 5P3 (CA)**
• **Lazaridis, Mihal**
**Waterloo, Ontario, N2T 2K1 (CA)**
• **Simmons, Sean**
**Waterloo, Ontario, N2T 1E7 (CA)**

(74) Representative: **Fennell, Gareth Charles et al**
**Kilburn & Strode**
**20 Red Lion Street**
**London WC1R 4PJ (GB)**

(56) References cited:
**EP-A- 0 938 208**         **US-A1- 2004 072 571**
**US-B1- 6 597 672**

## Description

The present invention relates generally to the communication of data pursuant to a high-speed data communication service, such as an Enhanced Data for Global Evolution (EDGE) communication service. More particularly, the present invention relates to apparatus, and an associated method, that allocates communication resources according to a Mobile Allocation Index Offset scheme.

## Background of the Invention

High-speed data services are increasingly performed by way of radio communication systems. Advancements in communication technologies have permitted the development and deployment of radio communication systems that permit the communication of data at high communication throughput rates. And, with continued advancements in communication technologies, improvements to such systems permit the throughput rates to be yet further increased. Various high-speed data services, and their associated mechanisms of implementation, are undergoing development, standardization, and implementation. An exemplary data communication service, referred to as GPRS (General Packet Radio Service) for GSM (Global System for Mobile communications) has achieved significant levels of deployment and usage. An extension to the general GPRS communication scheme, EDGE (Enhanced Data for Global Evolution) is presently undergoing deployment. Data throughput rates achievable in an EDGE-capable system are significantly higher than those achievable in its predecessor GPRS system.

While EDGE-based communications permit data to be communicated at substantially higher data rates than its GPRS predecessor, data services are becoming, and anticipated to become even more so, data-intensive. There is a continuing need to find ways yet further to increase the data throughput capabilities of EDGE-based communications to facilitate the speedy communication of increasingly data-intensive data communication services that are to be implemented in an EDGE-based, or other high-speed, data communication system.

Existing EDGE standard promulgations define, amongst other things, the channel structure used pursuant to EDGE-based communications. Channels are defined upon multiple carriers. But, due to various requirements, effectuation of a single communication service using communication resources upon multiple carriers is presently unavailable due to constraints in the standard promulgation.

European patent application no. 0938208 relates to a transmission method and a transmission apparatus for transmitting signals on the basis of a OFDM/TDMA-system, wherein a plurality of subcarriers being orthogonal to each other are allocated to a variable number of channels, each channel containing a variable number of subcarriers depending on information to be transmitted in said signals, wherein, for the transmission of said signals in a GSM-system having a constant number of predetermined GSM-frequeney channels and a constant number of predetermined GSM-timeslots being grouped in GSM-frames the number of said subcarriers is allocated corresponding to the bandwidth of said GSM- frequency channels, so that a multiple of one resulting OFDM/TDMA-timeslot matches with one or a multiple of one GSM-timeslots, wherein a pilot symbol is allocated to every n-th subcarrier in said GSM-frequency-channels, whereby n is an integer and >1, and wherein said signals are transmitted.

If a manner could be provided in a high-speed data radio communication system to utilize more fully available time-slot carrier combinations to perform a communication service, increased data throughput rates and spectral utilization would be achievable.

It is in light of this background information that the significant improvements of the present invention have evolved.

## Brief Description of the Drawings

Figure 1 illustrates a functional block diagram of an exemplary communication system that includes an embodiment of the present invention as a portion thereof.

Figure 2 illustrates a representation of exemplary communication resource allocation made pursuant to operation of an embodiment of the present invention.

Figure 3 illustrates a method flow diagram listing the method of operation of an embodiment of the present invention.

## Detailed Description

The present invention, accordingly, advantageously provides apparatus, and an associated method, that facilitates communication of data pursuant to a high-speed data communication service, such as an Enhanced Data for Global Evolution (EDGE) communication service or other communication system optionally utilizing frequency hopping.

Through operation of an embodiment of the present invention, a manner is provided by which to allocate communication resources across a plurality of radio carriers howsoever logically defined pursuant to a Mobile Allocation Index Offset (MAIO) scheme. The MAIO is an offset value to the actual Radio Frequency (RF) to implement frequency hopping, but is treated logically as an RF carrier itself. The likelihood of time slots being available for allocation across a plurality of carriers is greater than the likelihood of time slots being available for allocation on a single carrier, a limitation of existing allocation schemes.

By allocating communication resources across a plurality of index offsets, an increased likelihood that a contiguous series, such as a block, of time slots can be allocated for the performance of a data communication service during a communication session. When a contiguous sequence of time slots is available within a frame, the data is able to be communicated more quickly than when only making use of communication resources upon a single carrier for data communications during a communication session. And, even if contiguous time slots are not allocated, increased numbers of time slots allocated to a data communication session permits its completion due to the greater statistical level of resource allocation.

In one aspect of the present invention, the network part of the radio data communication system includes an analyzer that analyzes communication resource requirements needed to, or otherwise requested to, be provided pursuant to communicate data to perform a communication service during a communication session. The analyzer determines, for instance, the number of time slots that are needed to be allocated to the communication session to permit the data to be communicated between a set of communication stations. The determinations made by the analyzer are made, for instance, on a frame-by-frame basis, on a communication session basis, or upon another basis, all in a manner that permits dynamic resource allocation.

In another aspect of the present invention, the network part also includes a resource allocator that allocates resources to permit the communication of the data during a communication session to effectuate the communication service. The resource allocations are made, e.g., responsive to analysis of the communication requirements. The resource allocations are made across a plurality of MAIOs (Mobile Allocation Index Offsets) howsoever defined. When particular time slots are available on different index offsets or RF frequencies, allocations are made to communicate data pursuant to the communication session within the time slots of the different index offsets or RF frequencies. More generally, resources allocated by the resource allocator are not limited to selection of time slots on a single mobile allocation index offset or RF frequency but rather are allocated, when available, upon any index offset or frequency that the communication stations, parties to a communication session, are capable of operation.

In another aspect of the present invention, a message generator at the network part generates an allocation message that includes values identifying the communication resources allocated to communicate the data pursuant to effectuation of the communication service during a communication session. The allocation message is sent by the network part to a mobile station that is a party to the communication session pursuant to which data is to be communicated. If more than one mobile station is to be a party to the communication session, the allocation message is sent to each of the mobile stations. By sending the allocation message to each mobile station that is to be a party to the communication session, the mobile station is informed of the resource allocations, thereby to permit the mobile station to operate correctly to receive, or to transmit, communication data that is communicated during the communication session.

The mobile station includes a detector that detects the allocation message, once broadcast by the network part to the mobile station. The detector ascertains the values of the allocation message thereby to identify the allocated resources.

The mobile station also includes a controller that controls operation of the mobile station in response to the communication resources detected by the detector to be used pursuant to the communication of the data.

Communication resources are allocated in a manner that facilitates improved data throughput rates of the data that is communicated pursuant to performance of the communication session. The allocation is made to maximize the sum of time slots allocated for the communication session within the constraints of the capabilities of the communication stations that are parties to the communication session and to the reaction times of the communication stations needed to switch to the different radio carriers upon which communication resources are allocable.

In these and other aspects, therefore, apparatus, and an associated method, is provided for a communication station operable to communicate data. An analyzer is adapted to receive an indication of a characteristic of the data that is to be communicated by the first communication station. The analyzer is configured to analyze communication requirements required for the communication of the data. A resource allocator is adapted to receive an indication of the analysis made by the analyzer. The resource allocator is configured to allocate resources across a plurality of mobile allocation index offsets or frequencies for communication of the data.

In these and other aspects, therefore, further apparatus, and an associated method, is provided for a communication station operable pursuant to communication of data. A detector is configured to detect an allocation message delivered to the communication station. The allocation message identifies communication resources allocated to the communication station pursuant to the communication of the data. The resources that are allocated are allocated across a plurality of mobile allocation index offsets or carrier frequencies, e.g., radio carriers howsoever logically defined. A controller is adapted to receive an indication of detections made by the detector. The controller is configured to control operation of the communication station responsive to the detections.

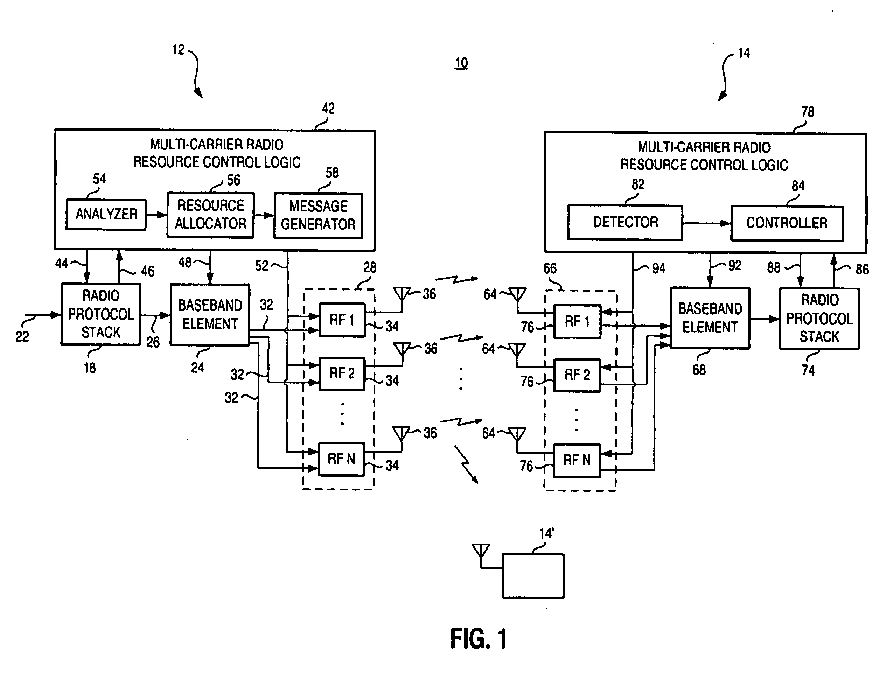

With these and other aspects in mind, therefore, reference is first made to Figure 1 that illustrates a communication system, shown generally at 10. The communication system is operable pursuant to an embodiment of the present invention. In the exemplary implementation, the communication system 10 forms a radio data communication system that provides for EDGE (Enhanced Data for Global Evolution) data services. While the following description shall describe exemplary operation of the communication system in terms of its exemplary implementation to provide for EDGE-based communication services, it should be understood that the teachings of the present invention are analogously applicable to other types of communication systems, e.g., operable pursuant to operating specifications that define other types of communication systems. Accordingly, the description of operation of the communication system 10 is for purposes of explanation only and not of limitation.

In the illustration of Figure 1, the communication system includes a set of communication stations, communication stations 12 and 14. Here, the communication station 12 is representative of elements of a network part of the communication system and shall be referred to, at times, as a network station 12. And, the communication station 14 is representative of a mobile station and shall, at times, subsequently be referred to as a mobile station. During operation, either of the communication stations 12 and 14 are capable of generating EDGE data for communication to effectuate an EDGE data service during a communication session. Operation shall be described with respect to effectuation of a downlink, EDGE communication service, i.e., EDGE data communicated by the network station 12 for delivery to the mobile station 14. Operation of the communication system to communicate data in an uplink direction can be analogously described. A communication station 14' is also shown in the figure. The communication station 14' is representative of the multi-access nature of the communication system. During exemplary operation, separate EDGE communication services are effectual with both the communication station 14 and the communication station 14'.

The communication system operates in general conformity with the EDGE/GPRS/GSM (Enhanced Data for Global Evolution/General Packet Radio Service/Global System for Mobile communications) operating specifications, particularly with respect to the EDGE channel structure defined therein. The EDGE channel structure defines a TDMA (Time Division Multiple Access) scheme including frames that comprise eight time slots. A maximum transmission rate of 59.2 kb/s per time slot is permitted. When a communication service is to be effectuated, communication resources, i.e., time slots within frames defined upon a carrier available for communication, are allocated for the communication of the EDGE data thereon. Theoretically, all eight time slots of a frame can be allocated to a single communication session, thereby permitting a maximum transmission rate of 473.6 kb/s (8*59.2 kb/s = 473.6 kb/s). However, in actual practice, allocation of such a large number of time slots on a single carrier, or, more generally, a single mobile allocation index offset or frequency is unachievable. Other operating requirements of the EDGE/GPRS/GSM system necessitate that a mobile station make various measurements, such as measurements that are required to be taken on signals broadcast in adjacent cells, i.e., cells adjacent to the active cell in which the mobile station is positioned. The operating specification, TS 45.008 [5] and TS 45.0002 [2], Annex B specify and define certain of these measurements. Additionally, due to the multi-access nature of the communication system, communication services, both data and traffic services, are performed by other communication station sets. Competition for communication resources limits the availability of contiguous time slots that are available to be allocated to effectuate a communication service. If, for instance, there is a sixty percent probability of availability of a single time slot for assignment, the statistical probability of six contiguous time slots on a single carrier being available is only 4.67 percent. And the probability of eight contiguous time slots on a single carrier being available drops to 1.68 percent. Even putting aside the limitations due to the need of a mobile station to make measurements, there is a statistically small likelihood that multiple, contiguous time slots would be available on a single carrier for allocation pursuant to a single communication service. While contiguous time slots are sometimes available on other radio carriers, to date, particularly in an EDGE-based system, allocating time slots on different radio carriers is not permitted.

The elements of the communication stations 12 and 14 are functionally represented and are formed of functional elements, implementable in any desired manner. Additionally, while the functional elements are represented together, the physical locations at which the elements are formed need not be in common. For example, the elements shown to form portions of the network station 12 need not be positioned at a single physical location, e.g., at a base transceiver station of the network part. Rather, the elements of the network station, in one implementation, are distributed amongst more than one location, such as at the base transceiver station and at a base station controller. The network station includes a radio protocol stack 18 to which user application data is applied by way of the line 22. The user application data is for communication to one or more mobile stations pursuant to one or more EDGE communication sessions. The radio protocol stack includes various logical layers including a radio resource management (RRM) layer.

The network station further includes a baseband element 24 to which data is provided, here represented by way of the lines 26. The baseband element performs various baseband operations including baseband processing, modulation, and channel coding.

The network part also includes a radio element 28 to which the data is applied, here by way of the lines 32. The radio element is formed, at least functionally, of radio frequency transceiver front ends 34. N transceivers are shown in the figure, each of which is coupled to an antenna transducer 36 that transduces the data into electromagnetic form for communication to the mobile station, or stations 14.

Pursuant to an embodiment of the present invention, the communication station 12 further includes a multi-carrier radio resource control logic element 42. The element 42 is at least functionally coupled to the radio protocol stack 18, represented by way of the lines 44 and 46, to the baseband element 24, here represented by way of the lines 48 and to the radio element 28, here represented by way of the lines 52. In the exemplary implementation, the element 42 is embodied at a radio resource management logical layer.

The multi-carrier radio resource control logic element includes an analyzer 54, a resource allocator 56, and an allocation message generator 58. The analyzer 54 receives indications of the data that is to be communicated by the network part to a mobile station pursuant to effectuation of a communication service during a communication session. The indication of the characteristic comprises, for instance, the amount of data that is to be communicated, or some type of indicia that through analysis by the analyzer permits the communication requirements to communicate the data to be analyzed. Indications of the analysis performed by the analyzer are provided to the resource allocator. The resource allocator allocates resources based upon the analysis made by the analyzer together with indications of data scheduling information. The communication resource allocations are made across a plurality of logically-defined radio carriers according to a mobile allocation index offset scheme. In the exemplary implementation, a time slot and radio carrier, defined in terms of a mobile allocation index offset, combination is provided for each of the allocations. Depending upon the capabilities of the communication stations that are to be parties to the communication session in which the data is communicated to effectuate the communication service, the allocations include time slots allocated on different carriers at concurrent times. And, the number of radio carriers across which the allocations are made is also dependent upon the capabilities of the communication stations. For an allocation to be permitted, the communication stations must further be capable of communicating at the frequency of the radio carrier. The allocations made by the resource allocator are also dependent upon such criteria, indications of which are further applied to the radio resource control logic 42.

Control messages are generated by the resource allocator and provided to the radio protocol stack, the baseband element, and the RF element to control their operation in conformity with the allocation of resources made by the allocator. An indication of the allocated resources is also provided to the allocation message generator 58. The message generator generates an allocation message that is provided to one or more of the RF transceivers 34 of the RF element 28 for communication to the mobile station 14. Through communication of the allocation message that contains values identifying the allocated resources, the mobile station is made aware of the allocated resources.

The mobile station includes structure analogous to structure of the network station. Here, the receive chain portion of the mobile station is shown. The mobile station includes an antenna transducer 64, an RF element 66, a baseband element 68, and a radio protocol stack 74. The RF element includes a plurality of RF transceivers 76 similar to the transceivers 34, are operable at different carrier frequencies.

The mobile station also includes a multi-carrier radio resource control logic element 78 pursuant to an embodiment of the present invention. The element 78 includes a detector 82 and a controller 84. And, the radio resource control logic element is coupled, at least functionally, to the radio protocol stack by way of the lines 86 and 88, to the baseband element 92, and to the RF transceivers of the RF element by way of the lines 94. In the exemplary implementation, the element 78 is embodied at a radio resource management layer.

The detector 82 operates to detect the allocation message sent by the network station to the mobile station. The detector extracts values contained in the allocation message, or otherwise identifies the communication resources allocated to the communication session to communicate the data pursuant to effectuation of a communication service. Detections made by the detector are provided to the controller 84. And, the controller operates to control operation of the mobile station so that the mobile station receives, and operates upon, the communicated data. The controller, for instance, controls operations of the various elements of the mobile station to ensure that the radio elements are operable at the proper times to receive the data communicated over the different carriers.

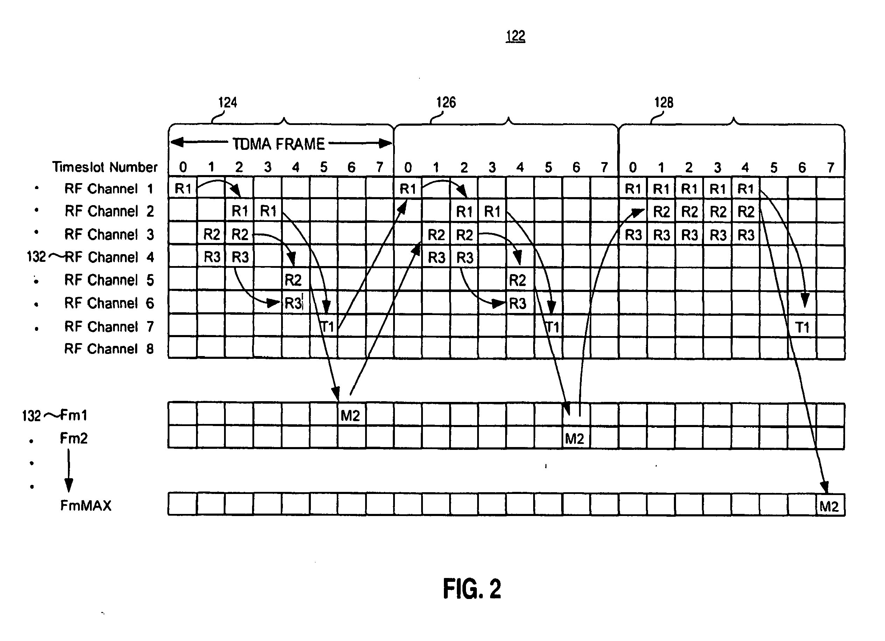

Figure 2 illustrates a representation, shown generally at 122, of communication resource allocations made for the communication of data pursuant to operation of an embodiment of the present invention. The representation illustrates three successive TDMA frames 124, 126, and 128, each of which includes eight time slots, numbered 0-7. Eight radio frequency carriers 132, identified as RF channels 1-8 of the inactive cell and carriers FM-1 - FM-MAX of an adjacent cell all identify carriers identified in the exemplary communication system.

Here, the mobile station is capable of receiving data communicated on three RF carriers simultaneously. Communication resource allocations are made, therefore, with the constraint that the data be communicated upon no more than three carriers during any particular time slot. The references R1, R2, and R3 are shown in the figure to identify the three carriers, defined logically according to an MAIO scheme, upon which data is communicated to the mobile station during any particular time slot. The indications T and M identify periods during which data is transmitted by the mobile station and during which measurements are made by the mobile station.

Resource allocations are made, by the allocator 56 shown in Figure 1, to maximize the sum of downlink time slots allocated to a single mobile station given the constraint that the mobile station receive data on no more than three carriers during any single time slot while also observing the reaction times Tta, Ttb, Tra, and Trb, as defined in the TS 45.002 [2], Annex B specification. The reaction times, generally, identify the time required of a mobile station to get ready to transmit or receive, respectively, before receiving a subsequent burst, transmitting a subsequent burst, or performing a measurement on an adjacent-cell signal.

In the exemplary implementation, carrier/time slot combinations are selected in terms of an MAIO (Mobile Allocation Index Offset) and time slot combination by "scavenging" for available resources according to the following equation:

$$MAX : \sum_{t=1}^{Nt} \sum_{R=1}^{Nr} S_{tR} u_{tR} ; u \in \{0,1\}$$

$$St : u = \begin{cases} a = 1 \wedge f_r = f_{r+1} \vee (f_m = f_r \vee f_t = f_r) : 1 \\ Else : 0 \end{cases}$$

Where:

$t$ = timeslot number
$R$ = RF deck number (both transmit and receive)
$Nt$ = Maximum number of timeslots in allocation
$Nr$ = Maximum number of RF decks available for simultaneous reception in mobile terminal
$S_{tR}$ = Radio resource of timeslot "t" on RF deck "R" for mobile receiver
$u_{tR}$ = Utilization of timeslot "t" on RF deck "R" permitted according to the reaction time constraints (Boolean)
$a$ = Timeslot availability for allocation to mobile downlink (Boolean)

Because the resources are not limited to those available upon a single carrier, a substantially increased possibility of availability of communication resources to effectuate communication of data is possible. As EDGE-based, as well as other types of, communication services are increasingly data-intensive, the increased availability of communication resources permits data to be communicated more quickly than that conventionally available.

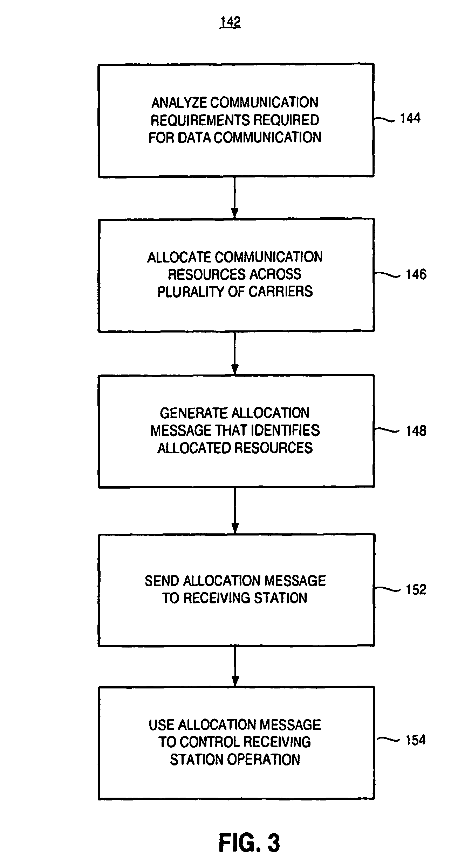

Figure 3 illustrates a method flow diagram, shown generally at 142, representative of the method of operation of an embodiment of the present invention by which to communicate data between a set of communication stations in a communication scheme that provides for mobile allocation index offset or carrier frequency.

First, and as indicated by the block 144, communication requirements required for the communication of the data are analyzed. The analysis is performed responsive to an indication of a characteristic of the data. Then, and as indicated by the block 146, communication resources are allocated across a plurality of radio carriers for communication of the data.

Thereafter, and as indicated by the blocks 148 and 152, an allocation message is generated and sent by a sending communication station to a receiving communication station that identifies allocations of the communication resources. And, as indicated by the block 154, the allocation message is used at the receiving communication station to control its operation pursuant to communication of the data across the plurality of radio carriers.

Improved communication performance of a high-speed data service is thereby provided. Increased throughput rates relative to those achievable when resource allocations are limited to those of a single radio carrier is provided. Increasingly data-intensive data communication services are better able to be carried out without noticeable delay.

The previous descriptions are of preferred examples for implementing the invention, and the scope of the invention should not necessarily be limited by this description. The scope of the present invention is defined by the following claims.

## Claims

1. Apparatus for a network communication station (12) operable to communicate data in a high-speed data communication scheme that provides for mobile allocation index offset over carrier frequencies using frequency hopping, said apparatus comprising:

an analyzer (54) adapted to receive an indication of a characteristic of the data that is to be communicated by the network communication station (12), said analyzer (54) configured to analyze communication requirements required for communication of the data and that permits dynamic resource allocation;

a resource allocator (56) adapted to receive an indication of the analysis made by said analyzer (54), said resource allocator (56) configured to allocate resources defined in terms of a plurality of mobile allocation index offsets across a plurality of radio carriers for communication of the data; and

an allocation message generator (58) adapted to receive an indication of allocation made by said resource allocator (56), said allocation message generator configured to generate an allocation message identifying the allocation made by said resource allocator.

2. The apparatus of claim 1 wherein time slots are defined upon the plurality of radio carriers and wherein the resources allocated by said resource allocator (56) are allocated to selected time slots of the mobile allocation index offsets to which the resources are allocated.

3. The apparatus of claim 1 wherein the network communication station (12) comprises a radio part (28) having radio elements operable at the plurality of radio carriers across which said resource allocator (56) allocates the resources.

4. The apparatus of claim 3 wherein said resource allocator (56) is further configured to generate a radio part communication station control message for application to the radio part (28) to control operation thereof pursuant to allocations made by said resource allocator (56).

5. The apparatus of claim 4 wherein values of the radio part communication station Control message cause the radio part (28) to be operative to communicate the data upon the radio carriers upon which said resource allocator (56) allocates the resources.

6. The apparatus of claim 1 wherein the network communication station (12) comprises a baseband part (24) and wherein said resource allocator is further configured to generate a baseband part communication station control message for application to the baseband part (24) to control operation thereof pursuant to allocations made by said resource allocator (56).

7. The apparatus of claim 1 wherein said analyzer (54) and said resource allocator (56) are embodied at a radio resource management layer of a radio protocol stack defined at the first communication station.

8. The apparatus of claim 1 wherein the data comprises a plurality of data streams for communication pursuant to a plurality of data communication services and wherein the indication of the characteristic that said analyzer (54) is adapted to receive comprises identification of a characteristic of each of the plurality of data streams.

9. The apparatus of claim 8 wherein the resources allocated by said resource allocator (56) comprise separate resource allocations for communication of each of the plurality of the data streams.

10. The apparatus of claim 1 wherein resources allocated by said resource allocator (56) comprises resources allocated upon more than one of the plurality of radio carriers during a concurrent time period.

11. The apparatus of claim 10 wherein time slots are defined upon the plurality of radio carriers, wherein the resources allocated by said resource allocator (56) are allocated to selected time slots of the radio carriers, including at least two time slots concurrently upon separate radio carriers.

12. The apparatus of claim 11 wherein the resources allocated to selected time slots are selected as a function both of time slot availability and tuning time requirements of the network communication station.

13. An apparatus for a mobile communication station (14) operable pursuant to communication of data in a high-speed data communication scheme that provides for mobile allocation index offset over carrier frequencies using frequency hopping, said apparatus comprising:

a detector (82) configured to detect an allocation message received by the mobile communication station, the allocation message identifying communication resources allocated to the mobile communication station (14) pursuant to the communication of the data, the resources allocated to the mobile communication station (14) being defined in terms of a plurality of mobile allocation index offsets across a plurality of radio carriers; and

a controller (84) adapted to receive an indication of detections made by said detector (82), said controller (84) configured to control operation of the mobile communication station responsive to the detections made by said detector (82).

14. The apparatus of claim 13 wherein time slots are defined upon the plurality of radio carriers and wherein the communication resources identified in the allocation message detected by said detector (82) are allocated to selected time slots to which the resources are allocated.

15. The apparatus of claim 13 wherein the mobile communication station (14) comprises a radio part (66) having radio elements operable at the plurality of radio carriers across which communication resources are identified in the allocation message detected by said detector (82) to be allocated.

16. The apparatus of claim 15 wherein said controller (84) is further configured to generate a radio part control message for application to the radio part (66) to control operation thereof pursuant to allocations identified in the allocation message.

17. The apparatus of claim 13 wherein the mobile communication station comprises a baseband part (68) and wherein said controller (84) is further configured to generate a baseband part control message for application to the baseband part (68) to control operation thereof pursuant to allocations identified in the allocation message.

18. A method for communicating data by a network communication station (12) in a high-speed data communication scheme that provides for mobile allocation index offset over carrier frequencies using frequency hopping, said method comprising the operations of:

analyzing (144) communication requirements required for communication of the data responsive to an indication of a characteristic of the data and that permits dynamic resource allocation;
allocating (146), responsive to analysis made during said operation of analyzing, resources across a plurality of radio carriers for communication of the data; and defined in forms of a plurality of mobile allocation index offsets generating (148) an allocation message identifying the allocation made during said operation of allocating.

19. The method of claim 18 further comprising the operations of:

sending (152) the allocation message that identifies allocations made during said operation of allocating to a mobile communication station; and
using (154) the allocation message at the mobile communication station to control operation thereof pursuant to communication of the data across the plurality of radio carriers allocated during said operation of allocating.

**Patentansprüche**

1. Vorrichtung für eine Netzwerkkommunikationsstation (12), welche betrieben werden kann, um Daten in einem Hochgeschwindigkeitsdatenkommunikationsschema zu kommunizieren, welches Mobile Allocation Index Offset über Trägerfrequenzen unter Benutzung von Frequenzhopping ermöglicht, wobei besagte Vorrichtung umfasst:

einen Analysator (54), der angepasst ist, um eine Indikation einer Eigenschaft der Daten, welche durch die Netzwerkkommunikationsstation (12) übertragen werden soll, zu empfangen, wobei besagter Analysator (54) konfiguriert ist, um Kommunikationsanforderungen zu analysieren, welche zur Kommunikation der Daten benötigt werden, und welcher dynamische Ressourcenallokation erlaubt;
ein Ressourcen-Allokierer (56), der angepasst ist, um eine Indikation der durch besagten Analysator (54) gemachten Analyse zu erhalten, wobei besagter Ressourcen-Allokierer (56) konfiguriert ist, um Ressourcen, definiert in Form von einer Vielzahl von Mobile Allocation Index Offsets, über eine Vielzahl von Funkträgern zur Kommunikation der Daten zu allokieren; und
einen Allokationsnachrichtengenerator (58), der angepasst ist, um eine Indikation der Allokation zu erhalten, welche durch den besagten Ressourcen-Allokierer (56) gemacht wurde, wobei besagter Allokationsnachrichtengenerator konfiguriert ist, um eine Allokationsnachricht zu generieren, welche die Allokation, die durch besagten Ressourcen-Allokierer gemacht wurde, identifiziert.

2. Die Vorrichtung aus Anspruch 1, wobei Zeitschlitze über die Vielzahl von Funkträgern definiert werden und wobei die Ressourcen, welche durch besagten Ressourcen-Allokierer (56) allokiert werden, zu ausgewählten Zeitschlitzen der Mobile Allocation Index Offsets, zu welchen die Ressourcen allokiert sind, allokiert werden.

3. Die Vorrichtung aus Anspruch 1, wobei die Netzwerkkommunikationsstation (12) einen Funkteil (28) umfasst, welcher Radioelemente hat, welche über die Vielzahl von Funkträgern betrieben werden können, über welche besagter Ressourcen-Allokierer (56) die Ressourcen allokiert.

4. Die Vorrichtung aus Anspruch 3, wobei besagter Ressourcen-Allokierer (56) weiter konfiguriert ist, um eine Funkteilkommunikationsstationssteuerungsnachricht zur Anwendung auf den Funkteil (28) zu generieren, um dessen Betrieb, gemäß der Allokationen, welche durch besagten Ressourcen-Allokierer (56) gemacht wurden, zu steuern.

5. Die Vorrichtung aus Anspruch 4, wobei Werte der Funkteilkommunikationsstationssteuerungsnachricht verursachen, dass der Funkteil (28) betrieben werden kann, um die Daten auf den Funkträgern, auf welchen besagter Ressourcen-Allokierer (56) Ressourcen allokiert, zu kommunizieren.

6. Die Vorrichtung aus Anspruch 1, wobei die Netzwerkkommunikationsstation (12) einen Basisbandteil (24) umfasst und wobei besagter Ressourcen-Allokierer weiter konfiguriert ist, um eine Basisbandteilkommunikationsstationssteuerungsnachricht zur Anwendung auf den Basisbandteil (24) zu generieren, um dessen Betrieb, gemäß der Allokationen, welche durch besagten Ressourcen-Allokierer (56) gemacht wurden, zu steuern.

7. Die Vorrichtung aus Anspruch 1, wobei besagter Analysator (54) und besagter Ressourcen-Allokierer (56) auf einer Funkressourcenverwaltungsschicht eines Funkprotokollstapels, welcher bei der ersten Kommunikationsstation definiert ist, ausgebildet sind.

8. Die Vorrichtung aus Anspruch 1, wobei die Daten eine Vielzahl von Datenströmen zur Kommunikation gemäß einer Vielzahl von Datenkommunikationsdiensten umfassen und wobei die Indikation der Eigenschaft, welche besagter Analysator (54) angepasst ist zu empfangen, eine Identifizierung einer Eigenschaft von jedem der Vielzahl von Datenströmen umfasst.

9. Die Vorrichtung aus Anspruch 8, wobei die Ressourcen, welche durch besagten Ressourcen-Allokierer (56) allokiert werden, separate Ressourcenallokationen zur Kommunikation von jedem der Vielzahl von Datenströmen umfassen.

10. Die Vorrichtung aus Anspruch 1, wobei die durch besagten Ressourcen-Allokierer (56) allokierten Ressourcen Ressourcen umfassen, welche während eines gleichzeitigen Zeitraums auf mehr als eine der Vielzahl von Funkträgern allokiert werden.

11. Die Vorrichtung aus Anspruch 10, wobei Zeitschlitze auf der Vielzahl von Funkträgern definiert werden, wobei die durch besagten Ressourcen-Allokierer (56) allokierten Ressourcen zu ausgewählten Zeitschlitzen der Funkträger allokiert werden, die mindestens zwei Zeitschlitze zeitgleich auf verschiedenen Funkträgern umfassen.

12. Die Vorrichtung aus Anspruch 11, wobei die Ressourcen, welche zu ausgewählten Zeitschlitzen allokiert werden, in Funktion von sowohl Zeitschlitzverfügbarkeit und Abstimmzeiterfordernissen der Netzwerkkommunikationsstation ausgewählt werden.

13. Eine Vorrichtung für eine mobile Kommunikationsstation (14), welche entsprechend zur Kommunikation von Daten in einem Hochgeschwindigkeitsdatenkommunikationsschema, welches Mobile Allocation Index Offset über Trägerfrequenzen unter Benutzung von Frequenzhopping ermöglicht, betrieben werden kann, wobei besagte Vorrichtung umfasst:

einen Detektor (82), der konfiguriert ist, um eine durch die mobile Kommunikationsstation empfangene Allokationsnachricht zu detektieren, wobei die Allokationsnachricht Kommunikationsressourcen identifiziert, welche zu der mobilen Kommunikationsstation (14) gemäß der Kommunikation der Daten allokiert wurden, wobei die zu der mobilen Kommunikationsstation (14) allokierten Ressourcen in Form einer Vielzahl von Mobile Alloction Index Offsets über eine Vielzahl von Funkträgern definiert sind; und
eine Steuerung (84), die angepasst ist, um eine Indikation der durch besagten Detektor (82) gemachten Detektionen zu empfangen, wobei besagte Steuerung (84) konfiguriert ist, um den Betrieb der mobilen Kommunikationsstation in Antwort auf die durch besagten Detektor (82) gemachte Detektion zu steuern.

**14.** Die Vorrichtung aus Anspruch 13, wobei Zeitschlitze über die Vielzahl von Funkträgern definiert werden und wobei die Kommunikationsressourcen, welche in der Allokationsnachricht identifiziert werden, welche durch besagten Detektor (82) detektiert wurde, zu ausgewählten Zeitschlitzen, zu welchen die Ressourcen allokiert sind, allokiert werden.

**15.** Die Vorrichtung aus Anspruch 13, wobei die mobile Kommunikationsstation (14) einen Funkteil (66) umfasst, welcher Funkelemente hat, welche über die Vielzahl von Funkträgern betrieben werden können, über welche Kommunikationsressourcen in der Allokationsnachricht, welche durch besagten Detektor (82) detektiert wurde, zum Allokieren identifiziert werden.

**16.** Die Vorrichtung aus Anspruch 15, wobei besagte Steuerung (84) weiter konfiguriert ist, eine Funkteilsteuerungsnachricht zur Anwendung auf den Funkteil (66) zu generieren, um dessen Betrieb gemäß der in der Allokationsnachricht identifizierten Allokationen zu steuern.

**17.** Die Vorrichtung gemäß Anspruch 13, wobei die mobile Kommunikationsstation einen Basisbandteil (68) umfasst und wobei besagte Steuerung (84) weiter konfiguriert ist, um eine Basisbandteilsteuerungsnachricht zur Anwendung auf den Basisbandteil (68) zu generieren, um dessen Betrieb gemäß der in der Allokationsnachricht identifizierten Allokationen zu steuern.

**18.** Ein Verfahren zur Kommunikation von Daten durch eine Netzwerkkommunikationsstation (12) in einem Hochgeschwindigkeitsdatenkommunikationsschema, welches Mobile Allocation Index Offset über Trägerfrequenzen unter Benutzung von Frequenzhopping ermöglicht, wobei besagtes Verfahren die Operationen umfasst:

Analysieren (144) von Kommunikationserfordernissen, welche für eine Kommunikation der Daten aufgrund einer Indikation einer Eigenschaft der Daten erforderlich sind und welche dynamische Ressourcenallokation ermöglicht;
Allokieren (146), basierend auf der Analyse, welche durch besagte Operation des Analysierens gemacht wurde, von Ressourcen, definiert in Form einer Vielzahl von Mobile Allocation Index Offsets, über eine Vielzahl von Funkträgern zur Kommunikation der Daten; und
Generieren (148) einer Allokationsnachricht, welche die Allokation, welche während besagter Operation des Allokierens gemacht wurde, identifiziert.

**19.** Das Verfahren aus Anspruch 18, welches weiter die Operationen umfasst:

Senden (152) der Allokationsnachricht, welche während besagter Operation des Allokierens gemachte Allokation identifiziert, an eine mobile Kommunikationsstation; und
Nutzen (154) der Allokationsnachricht bei der mobilen Kommunikationsstation, um dessen Betrieb gemäß der Kommunikation der Daten über die Vielzahl von Funkträgern, welche während besagter Operation des Allokierens allokiert wurden, zu kontrollieren.

**Revendications**

**1.** Appareil pour une station de communication de réseau (12), en mesure de communiquer des données à l'aide d'un mécanisme de communication de données à grande vitesse qui fournit un décalage mobile d'index d'allocation sur des fréquences porteuses, en utilisant des sauts de fréquences, ledit appareil comprenant:

un analyseur (54), conçu pour recevoir une indication d'une caractéristique des données qui doivent être communiquées par la station de communication de réseau (12), ledit analyseur (54) étant configuré pour analyser les besoins de communication nécessaires pour la communication des données et pour permettre une attribution dynamique des ressources ;
un moyen d'allocation de ressources (56), conçu pour recevoir une indication de l'analyse effectuée par ledit analyseur (54), ledit moyen d'allocation de ressources (56) étant configuré pour allouer des ressources définies en termes d'une pluralité de décalages mobiles d'index d'allocation sur une pluralité de porteuses radio, pour la communication des données ; et
un générateur de message d'allocation (58), conçu pour recevoir une indication de l'allocation effectuée par ledit moyen d'allocation de ressources (56), ledit générateur de message d'allocation étant configuré pour produire un message d'allocation qui identifie l'allocation effectuée par ledit moyen d'allocation de ressources.

**2.** Appareil selon la revendication 1, dans lequel des intervalles de temps sont définis sur la pluralité de porteuses radio et dans lequel les ressources allouées par ledit moyen d'allocation de ressources (56) sont allouées à des intervalles de temps sélectionnés appartenant aux décalages mobiles d'index d'allocation auxquels les ressources sont allouées.

**3.** Appareil selon la revendication 1, dans lequel la station de communication de réseau (12) comprend une partie radio (28) ayant des éléments radio pouvant fonctionner à la pluralité de porteuses radio sur lesquelles ledit moyen d'allocation de ressources (56) alloue les ressources.

**4.** Appareil selon la revendication 3, dans lequel ledit moyen d'allocation de ressources (56) est en outre configuré pour produire un message de commande de partie radio de station de communication, afin de demander à la partie radio (28) de commander le fonctionnement de celle-ci d'après les allocations effectuées par ledit moyen d'allocation de ressources (56).

**5.** Appareil selon la revendication 4, dans lequel des valeurs du message de commande de la partie radio de la station de communication commandent à la partie radio (28) de fonctionner en communiquant les données sur les porteuses radio sur lesquelles ledit moyen d'allocation de ressources (56) alloue les ressources.

**6.** Appareil selon la revendication 1, dans lequel la station de communication de réseau (12) comprend une partie en bande de base (24) et dans lequel ledit moyen d'allocation de ressources est en outre configuré pour produire un message de commande de la partie en bande de base de la station de communication, afin de demander à la partie en bande de base (24) de commander le fonctionnement de celle-ci d'après les allocations effectuées par ledit moyen d'allocation de ressources (56).

**7.** Appareil selon la revendication 1, dans lequel ledit analyseur (54) et ledit moyen d'allocation de ressources (56) sont mis en oeuvre dans une couche de gestion des ressources radio d'une pile de protocoles radio définie dans la première station de communication.

**8.** Appareil selon la revendication 1, dans lequel les données comprennent une pluralité de flux de données destinés à être communiqués dans le cadre d'une pluralité de services de communication de données et dans lequel l'indication de caractéristique que ledit analyseur (54) est conçu pour recevoir comprend une identification d'une caractéristique de chacun des flux dans la pluralité de flux de données.

**9.** Appareil selon la revendication 8, dans lequel les ressources allouées par ledit moyen d'allocation de ressources (56) comprennent des allocations de ressources distinctes pour la communication de chacun des flux dans la pluralité de flux de données.

**10.** Appareil selon la revendication 1, dans lequel les ressources allouées par ledit moyen d'allocation de ressources (56) comprennent des ressources allouées sur plus d'une porteuse sur la pluralité de porteuses radio, pendant une période de temps simultanée.

**11.** Appareil selon la revendication 10, dans lequel des intervalles de temps sont définis sur la pluralité de porteuses radio, dans lequel les ressources allouées par ledit moyen d'allocation de ressources (56) sont allouées dans des intervalles de temps sélectionnés des porteuses radio, y compris au moins deux intervalles de temps simultanément sur des porteuses radio distinctes.

**12.** Appareil selon la revendication 11, dans lequel les ressources allouées sur des intervalles de temps sélectionnés sont sélectionnées en fonction à la fois de la disponibilité des intervalles de temps et des exigences de temps de syntonisation de la station de communication de réseau.

**13.** Appareil pour une station de communication mobile (14), fonctionnant pour la communication de données à l'aide d'un mécanisme de communication de données à grande vitesse qui fournit un décalage mobile d'index d'allocation sur des fréquences porteuses, en utilisant des sauts de fréquences, ledit appareil comprenant :

un détecteur (82), configuré pour détecter un message d'allocation reçu par la station de communication mobile, le message d'allocation identifiant des ressources de communication allouées à la station de communication mobile (14) pour la communication des données, les ressources allouées à la station de communication mobile (14) étant définies en termes d'une pluralité de décalages mobiles d'index d'allocation sur une pluralité de porteuses radio; et

un contrôleur (84), conçu pour recevoir une indication des détections effectuées par ledit détecteur (82), ledit contrôleur (84) étant configuré pour commander le fonctionnement de la station de communication mobile en réponse aux détections effectuées par ledit détecteur (82).

14. Appareil selon la revendication 13, dans lequel des intervalles de temps sont définis sur la pluralité de porteuses radio et dans lequel les ressources de communication identifiées dans le message d'allocation détecté par ledit détecteur (82) sont allouées à des intervalles de temps sélectionnés auxquels sont allouées les ressources.

15. Appareil selon la revendication 13, dans lequel la station de communication mobile (14) comprend une partie radio (66) ayant des éléments radio pouvant fonctionner à la pluralité de porteuses radio sur lesquelles doivent être allouées des ressources de communication qui sont identifiées dans le message d'allocation détecté par ledit détecteur (82).

16. Appareil selon la revendication 15, dans lequel ledit contrôleur (84) est en outre configuré pour produire un message de commande de partie radio afin de demander à la partie radio (66) de commander le fonctionnement de celle-ci d'après les allocations identifiées dans le message d'allocation.

17. Appareil selon la revendication 13, dans lequel la station de communication mobile comprend une partie en bande de base (68) et dans lequel ledit contrôleur est en outre configuré pour produire un message de commande de partie en bande de base afin de demander à la partie en bande de base (68) de commander le fonctionnement de celle-ci d'après les allocations identifiées dans le message d'allocation.

18. Procédé de communication de données par une station de communication de réseau (12) à l'aide d'un mécanisme de communication à grande vitesse qui fournit des décalages mobiles d'index d'allocation sur des fréquences porteuses, en utilisant des sauts de fréquences, ledit procédé comprenant les étapes consistant à :

analyser (144) les besoins de communication nécessaires pour la communication des données, en réponse à une indication d'une caractéristique des données, pour permettre une attribution dynamique des ressources ;
allouer (146), en réponse à l'analyse effectuée dans ladite étape d'analyse, des ressources définies en termes d'une pluralité de décalages mobiles d'index d'allocation sur une pluralité de porteuses radio, pour la communication des données ; et
produire (148) un message d'allocation qui identifie l'allocation effectuée dans ladite étape d'allocation.

19. Procédé selon la revendication 18, comprenant en outre les étapes consistant à :

envoyer (152) le message d'allocation qui identifie les allocations effectuées dans ladite étape d'allocation à une station de communication mobile ; et
utiliser (154) le message d'allocation sur la station de communication mobile afin de commander le fonctionnement de celle-ci afin de communiquer les données sur la pluralité de porteuses radio allouées dans ladite étape d'allocation.

**FIG. 1**

EP 1 786 219 B1

FIG. 2

<u>142</u>

```
┌─────────────────────────┐
│   ANALYZE COMMUNICATION  │
│   REQUIREMENTS REQUIRED  │~ 144
│   FOR DATA COMMUNICATION │
└─────────────────────────┘
            │
            ▼
┌─────────────────────────┐
│   ALLOCATE COMMUNICATION │
│     RESOURCES ACROSS     │~ 146
│   PLURALITY OF CARRIERS  │
└─────────────────────────┘
            │
            ▼
┌─────────────────────────┐
│    GENERATE ALLOCATION   │
│   MESSAGE THAT IDENTIFIES │~ 148
│    ALLOCATED RESOURCES   │
└─────────────────────────┘
            │
            ▼
┌─────────────────────────┐
│   SEND ALLOCATION MESSAGE │
│     TO RECEIVING STATION  │~ 152
│                          │
└─────────────────────────┘
            │
            ▼
┌─────────────────────────┐
│   USE ALLOCATION MESSAGE │
│    TO CONTROL RECEIVING  │~ 154
│     STATION OPERATION    │
└─────────────────────────┘
```

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0938208 A